# EUROPEAN PATENT SPECIFICATION

(11) **EP 4 476 304 B1**
(45) Date of publication and mention of the grant of the patent: **12.11.2025**
(21) Application number: 23703856.7
(22) Date of filing: 30.01.2023
(51) Int. Cl.: C10J 3/78, C10J 3/20, C10B 49/16, C10B 53/02, C10J 3/30, C10J 3/84, B01J 3/04

(54) **METHOD AND APPARATUS FOR GASIFICATION OF BIOGENIC MATERIAL**
VERFAHREN UND VORRICHTUNG ZUR VERGASUNG BIOGENER STOFFE
PROCÉDÉ ET APPAREIL DE GAZÉIFICATION DE MATÉRIAU BIOGÈNE

(30) Priority: 11.02.2022 GB 202201816
(43) Date of publication of application: 18.12.2024
(73) Proprietor: Wild Hydrogen Limited, Gloucester Gloucestershire GL2 2JH (GB)
(72) Inventor: WICKHAM, Mark, London N1 7GU (GB); GREEFF, Andre, London N1 7GU (GB)
(74) Representative: Sirius IP
(86) International application number: PCT/GB2023/050205
(87) International publication number: WO 2023/152464

(56) References cited:
- WO-A1-2009/091325
- WO-A1-2013/106546
- CN-A- 103 113 919
- DE-A1- 3 729 877
- GB-A- 716 740

## Description

### FIELD OF THE INVENTION

The present invention relates to gasification of biogenic material, more specifically gasification under high pressure and temperature to produce hydrogen.

### BACKGROUND OF THE INVENTION

The gasification of biogenic material to produce hydrogen has been the subject of intense research over previous years, since it provides a renewable source of energy from organic materials. The process can even be made carbon- negative when carbon capture techniques are used to separate carbon from the gas that is produced. The biogenic material may for example comprise wood chippings or pellets, household waste, animal manure, etc, sometimes referred to as biomass material.

Gasification can take place under a variety of temperatures and pressures, however one promising avenue in research has been the use of very high pressures and elevated temperatures, at which the moisture content of the biogenic material enters a supercritical state. A supercritical state typically occurs at temperatures greater than 374.4 °C and pressures greater than 22.064 MPa for water, and drives a faster reaction rate and water-gas shift with increased hydrogen yield. Virtually complete gasification of the biogenic material into hydrogen gas, carbon dioxide and steam can be achieved. The gasification occurs in the presence of water (steam), which acts as a catalyst in these conditions and that allows conversion of carbon monoxide and water into carbon dioxide and hydrogen gas in the water-gas shift reaction.

However, the commercialisation of this process into a large-scale, workable system is not straightforward. The gasification reaction is endothermic such that energy in the form of heat has to be supplied to the biogenic material, and heat losses detract from the efficiency of the process.

As well as the energy for the endothermic reaction, energy has to be provided to evaporate and superheat the moisture in the biogenic material as well as heat the biogenic material itself, with steam added for the water-gas shift reaction in a separate process to the gasifier.

The most prominent state of the art is to gasify the biogenic material in a fluidised bed reactor, because heat transfer is rapid between solids, but this technology requires the biogenic material to be reduced in size and made more uniform for even distribution in the bed. In pressurised systems the biogenic material is often pulverised to a very small size with a liquid additive to allow pumping into the gasifier. Additionally, the biogenic material often requires drying to maintain the elevated temperature of the bed required for gasification. All of this biogenic material processing is expensive and adds considerably to the cost.

The state of the art gasifiers produce a syngas at elevated temperature (approx. 700 °C) and at atmospheric pressure or slightly pressurized, The syngas is then cooled and scrubbed for the water-gas shift reaction, and then cooled to atmospheric temperature for a compressor to boost the pressure to typically 2.6MPa for separating the hydrogen from the carbon dioxide and other constituents. The compression step is expensive and consumes a lot of power.

Patent application publication US 2019/0062656 A1 describes gasification of biogenic material under supercritical conditions, in which heat exchangers are used to increase the efficiency of the process. However, feeding the process with biogenic material is also problematic, typically requiring the biogenic material to be formed into a liquid slurry so that it can be pumped in under the high pressures that are required. This typically requires the biogenic material to be pre-processed to regulate the particle size of the biogenic material, and involves the injection of larger quantities of water than are necessary for the water-gas shift reaction to take place, which is inefficient.

CN103113919 A discloses a biomass pyrolysis system of a three-stage reactor and a working method thereof. The system is composed of a rapid fluidized bed oxidization furnace, a first cyclone separator, a flue gas duct, a first return valve, a bubbling fluidized bed calcining furnace, a second return valve, a second cyclone separator, a CO₂ pipeline, a third return valve, a rotary pyrolyzing furnace, a feeding hole, a gas outlet and a hot packing auger.

WO2009/091325 A1 discloses a biomass gasification method and apparatus for production of syngas with a rich hydrogen content. In the gasification process the gasification energy is supplied by the sensible heat carried by a high temperature agent combined with the heat released by the chemical reaction between calicined lime and carbon dioxide.

GB716740 A discloses a process for the complete gasification of solid fuel using steam and air with or without added oxygen as the gasifying medium. The gasification reaction is carried out under pressure and at a temperature not exceeding 775 °C.

DE3729877 A1 discloses an autoclave for the thermal conversion of calcium sulphate dihydrate into alpha-calcium sulphate hemihydrate. The autoclave possesses a pressureproof vessel having a cylindrical middle section and two cones which adjoin this middle section and can be closed at the bottom and the top by a closure in each case. In the lower cone there is arranged a slit grating in such a way that a water collection space is formed thereunder. The slit grating is connected to a line for the introduction of saturated steam under super-atmospheric pressure. The autoclave is mounted on bearings on a horizontal tilting axle so as to be tiltable, with the steam feed line likewise running in the tilting axle. In the bottom closure, there is provided a drain valve for the liberated water of crystallisation. The top closure can be replaced by a two-part flap closure during emptying of the autoclave.

WO2013/106546 A1 discloses a method of converting solid carbon-based material comprising the steps of: providing a rotatable chamber in which the material can be heated, introducing the material into the chamber, indirectly heating the chamber, rotating the heated chamber with the material in the heated chamber to reduce the material, collecting low temperature gases or oil or both from the reduced material from the chamber, and collecting residual solids from the reduced material from the chamber, wherein the chamber is heated to a temperature between about 350 °F and about 1100 °F (177 to 593 °C).

It is therefore an object of the invention to improve upon the known art.

### SUMMARY OF THE INVENTION

According to a first aspect of the invention, there is provided a method of producing hydrogen gas from biogenic material within a pressure vessel. The method comprises heating a granular material to greater than 500°C, adding a batch of biogenic material into the pressure vessel with the heated granular material at atmospheric pressure, closing the pressure vessel, and mixing the heated granular material with the biogenic material inside the closed pressure vessel to raise the temperature of the biogenic material and commence gasification, the gasification producing gas that increases the pressure inside the pressure vessel, the produced gas comprising hydrogen gas.

Since the method does not process a continuous stream of biogenic material, but instead processes biogenic material in batches, there is no need to pre-process the biogenic material into a slurry that can be pumped under pressure. Instead, the biogenic material can be added to the pressure vessel at the beginning of the process, before any pressure builds inside the pressure vessel. The biogenic material may be an unprocessed biomass feedstock with a variable moisture content, and typically having an average moisture content of greater than 50%.

Conventionally, heating of large amounts of biogenic material in one go is problematic due to particle size variations and moisture content variations within the biogenic material, and also poor heat conductivity. But, in accordance with the invention it is possible to rapidly heat the biogenic material to the high temperatures required by mixing it with the heated granular material. Mixing the granular material with the biogenic material preferably comprises rotating the pressure vessel, thereby distributing the heated granular material throughout the biogenic material, regardless of the particle sizes and moisture contents of the biogenic material.

The granular material is typically composed of a multitude of particles (granules), and may have particle sizes of up to 5mm, more preferably between 0.5mm and 2mm, for efficient mixing and heat transfer to the biogenic material.

The granular material may be composed of inert or non-combustible materials, for example at least one of sand, olivine and calcium oxide. Over time, ash or left-over solids from previous gasification cycles may add to the granular material. Periodically, for example after a fixed number of gasification cycles, the granular material may be refreshed be replacing and/or cleaning the granular material.

The granular material may be heated to a high temperature within the pressure vessel before the biogenic material is added. For example, by combusting hydrogen gas in the pressure vessel that was left over from gasification of a previous batch of biogenic material, especially when the granular material is already hot from gasification of the previous batch of biogenic material. Alternatively, the granular material may be removed from the pressure vessel for heating, especially if the granular material needs to be heated up from ambient temperature.

The granular material preferably has a bulk density of at least 1000 kg/m³, more preferably at least 2000 kg/m³. The biogenic material typically has a much lower bulk density, for example in the region of 100 kg/m³ to 600 kg/m³.

The weight of the granular material held in the pressure vessel is preferably at least ten times the weight of the biogenic material held in the pressure vessel when the pressure vessel is at full capacity, and so the granular material may store more than enough heat to raise the temperature of the biogenic material and drive the gasification reaction. If the correct ratio of granular material to biogenic material is used, depending on moisture content and biogenic material type, then there will be sufficient energy in the granular material to drive the necessary drying and endothermic gasification steps. However, if more heat is needed then the method may further comprise injecting oxygen into the pressure vessel to combust some of the hydrogen, adding heated gas, and/or using electrical heating.

In an embodiment, the granular material may be heated to at least 800 °C, for example 850 °C. When the granular material is mixed with the biogenic material, the granular material may heat the biogenic material up to the necessary temperature to carry out the drying and gasification steps, for example at least 600 °C, preferably about 700 °C. The granular material ideally contains sufficient energy at 850 °C to create the reactions required for gasification and water-gas shift, and leaving the contents of the pressure vessel at ideally 700 °C and supercritical pressure, allowing the hydrogen, carbon dioxide and other gaseous constituents to be removed at high pressure. This may allow the hydrogen to be transferred to a subsequent processing stage without the need for a compressor to increase its pressure.

The batch of biogenic material is added into the pressure vessel at atmospheric pressure, for example by loading the biogenic material into a cartridge, and sliding the cartridge into an end of the pressure vessel. The pressure vessel is large and heavy, and the cartridge provides a convenient means of transferring the biogenic material from place to place quickly. For example, the cartridge may be moved to a position where it can be loaded with biogenic material from a lorry, and then slid into the pressure vessel to begin gasification.

When loading the cartridge, the heated granular material preferably resides at an opposite end of the pressure vessel from the cartridge. Since the biogenic material is at an opposite end of the pressure vessel from the heated granular material, the biogenic material does not receive enough heat from the heated granular material to begin gasification.

Combustion/oxidisation of the incoming batch of biogenic material is undesired, and so the method may further comprise pumping inert gas such as carbon dioxide or steam into the pressure vessel to purge it of oxygen as the cartridge is loaded into the pressure vessel, preferably both before and after the pressure vessel has been closed, prior to the mixing of the heated granular material with the biogenic material.

When the granular material and the biogenic material are mixed, the gasification reaction begins, and the pressure inside the pressure vessel gradually builds. The gas produced by the gasification is a syngas. The syngas may comprise the hydrogen as H₂.

As the gasification continues, the pressure inside the pressure vessel preferably reaches the pressure required for supercritical water gasification, and may be regulated to prevent excessive pressures from occurring. The supercritical water drives a faster reaction rate and the water-gas shift with increased hydrogen yield, and reduced tars and char.

The batch of biogenic material may not have a high enough moisture content to efficiently convert the carbon monoxide that is produced to hydrogen, and so the method may further comprise pumping water or steam into the pressure vessel to induce a complete water-gas shift reaction subsequent to or during the mixing of the heated granular material with the biogenic material.

Once the gasification reaction is complete and substantially all of the biogenic material has been converted, the pressurised hydrogen gas inside the pressure vessel can be outlet from the pressure vessel to a subsequent stage, for example for further refinement processing or storage. The hydrogen, being the lightest of the gases produced, will typically congregate towards the top of the pressure vessel. Therefore, the pressure vessel may be rotated to an orientation with the outlet for hydrogen at the top, before allowing the hydrogen to exit the pressure vessel. The granular material being the heaviest component will be present at the bottom, with gases such as carbon dioxide and steam typically present between the granular material and the hydrogen. It will be understood that the various gases may be in supercritical fluid phases within the pressure vessel, depending on the pressure and temperature within the pressure vessel.

The granular material may be calcium oxide, or be primarily composed of calcium oxide. Then, carbon dioxide produced by the gasification may react with the calcium oxide to produce calcium carbonate, allowing the carbon to be captured. After the gasification reaction has been completed and hydrogen removed, the granular material including the calcium carbonate may be heated (calcined) to release carbon dioxide from the calcium carbonate, and the carbon dioxide captured for storage. This heating may be done after removal of the calcium carbonate from the pressure vessel, or, more preferably, the heating of the calcium carbonate may be done after the hydrogen has been extracted from the pressure vessel, and whilst the calcium carbonate is still within the pressure vessel. This heating converts the calcium carbonate back to calcium oxide, in preparation for gasification of the next batch of biogenic material. The carbon dioxide can be extracted from the pressure vessel and stored, before gasification of the next batch of biogenic material begins.

The use of calcium oxide to capture the carbon dioxide and subsequently release it for collection may consume minimal extra energy when applied in the context of the invention, since the heating of the granular material after the gasification is already required in preparation for gasification of the next batch of biogenic material. For example, the granular material including the calcium carbonate could be heated from 700 °C to 900 °C after the gasification has been completed, to release carbon dioxide from the calcium carbonate for collection, and to return the calcium carbonate to calcium oxide at 900 °C ready for gasification of the next batch of biogenic material in the next gasification cycle.

The pressure vessel may therefore enable gasification of the biogenic material to produce gas, water-gas shift of the produced gas, and carbon capture all within the pressure vessel. This is much simpler and more efficient than known gasification processes, which often require separate vessels for gasification, water-gas shift and carbon capture.

According to a second aspect of the invention, there is provided an apparatus for producing hydrogen gas from biogenic material, the apparatus comprising a pressure vessel configured to store a granular material that is heated to at least 500 °C, the pressure vessel comprising a head that is openable to add a batch of biogenic material at an opposite end of the pressure vessel from the heated granular material whilst the pressure vessel is at atmospheric pressure, and a prime mover configured to rotate the pressure vessel to mix the granular material and the biogenic material together; wherein the pressure vessel is cylindrical in shape and comprises pivots, wherein the prime mover is configured to rotate the pressure vessel about the pivots, and wherein the pivots enable pivoting of the pressure vessel about an axis that is perpendicular to a longitudinal axis of the cylindrical shape. The pressure vessel and granular material may be the same pressure vessel and granular material as described in relation to the first aspect of the invention.

The pressure vessel is cylindrical in shape and comprises pivots, and the prime mover is configured to rotate the pressure vessel about the pivots. The pivots enable pivoting of the pressure vessel about an axis that is perpendicular to a longitudinal axis of the cylindrical shape. Accordingly, material inside the pressure vessel repeatedly drops from one end of the cylindrical shape to the other end of the cylindrical shape when the pressure vessel is rotated, thoroughly mixing the heated granular material with the biogenic material within an interior space of the pressure vessel. The two pivots may also comprise inlets for introducing fluids to the pressure vessel or extract fluids from the pressure vessel.

The apparatus may comprise a cartridge that is configured to slide into the pressure vessel when the head is opened from the pressure vessel. The cartridge may be removed from the pressure vessel and loaded with a next batch of biogenic material from a lorry, crane, conveyor or hopper, and then slid back into the pressure vessel for gasification of the biogenic material.

The pressure vessel preferably comprises an outer skin, an inner skin, and a heat insulative material between the inner and outer skins. The heat insulative material blocks loss of heat from the heated granular material and the biogenic material to the external environment. The pressure vessel may comprise an expansion joint between the inner skin and the head of the pressure vessel, to accommodate relative axial and radial expansion of the inner skin as it heats up whilst the outer skin remains cool.

The cartridge may be configured to slide inside the inner skin whilst leaving an annular and cylindrical space between the cartridge and the inner skin, and the head may comprise an inlet to the annular and cylindrical space, for injection of fluid or gas into the pressure vessel prior to and/or during gasification. An end of the cartridge opposite from the head of the pressure vessel may comprise an annular filter configured to block entry of the heated granular material and the biogenic material into the annular and cylindrical space. The cartridge may be configured for repeated removal and attachment from the head of the pressure vessel, for example to allow the head to be closed on the pressure vessel so that the granular material inside the pressure vessel can be heated whilst the cartridge is being filled with biogenic material.

The pressure vessel may comprise an agitation device inside the pressure vessel, the agitation device configured to agitate the mixture of the granular material and the biogenic material. This improves the mixing of the granular material and the biogenic material, leading to better heat transfer from the granular material to the biogenic material. This increases the rate of reaction, reducing the cycle time for each batch of biogenic material, and ultimately increasing hydrogen production. The agitation device may comprise baffles that protrude into the interior space of the pressure vessel, thereby agitating the mixture of the granular material and the biogenic material as the mixture passes over the baffles when rotating the pressure vessel.

### BRIEF DESCRIPTION OF THE DRAWINGS

Embodiments of the invention will now be described by way of non-limiting example only and with reference to the accompanying drawings, in which:
Fig. 1 shows a schematic perspective diagram of a pressure vessel in accordance with an embodiment of the invention;
Fig. 2 shows a schematic perspective diagram of the pressure vessel of Fig. 1 when mounted for rotation by a prime mover;
Fig. 3 shows a schematic cross-sectional diagram of the pressure vessel of Fig. 1, including a cartridge for loading biogenic material and a granular material inside the pressure vessel;
Fig. 4 shows a schematic diagram of a lorry being used to load biogenic material into the cartridge of Fig. 3;
Fig. 5 shows a schematic cross-sectional diagram of the pressure vessel and the cartridge of Fig. 3, prior to loading the cartridge with the biogenic material into the pressure vessel;
Fig. 6 shows a schematic cross-sectional diagram of the pressure vessel and the cartridge of Fig. 3, after the cartridge with the biogenic material has been loaded into the pressure vessel;
Fig. 7 shows an enlarged schematic cross-sectional diagram of a head end of the pressure vessel of Fig. 1;
Fig. 8 shows a schematic cross-sectional diagram of the pressure vessel and the cartridge of Fig. 6, after the pressure vessel has been rotated into an inverted orientation to mix the granular material and the biogenic material;
Fig. 9 shows a schematic cross-sectional diagram of the pressure vessel and the cartridge of Fig. 8, after the pressure vessel has been rotated into an upright orientation to further mix the granular material and the biogenic material; and

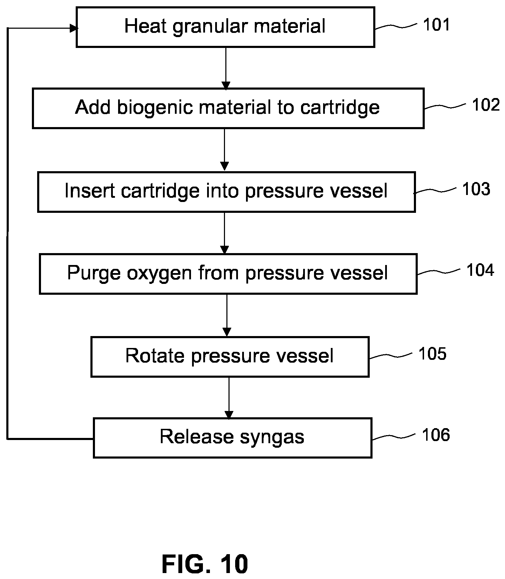

Fig. 10 shows a flow diagram of a method for producing hydrogen gas from biogenic material within a pressure vessel, for example the pressure vessel of Fig. 1.

The figures are not to scale, and same or similar reference signs denote same or similar features.

### DETAILED DESCRIPTION

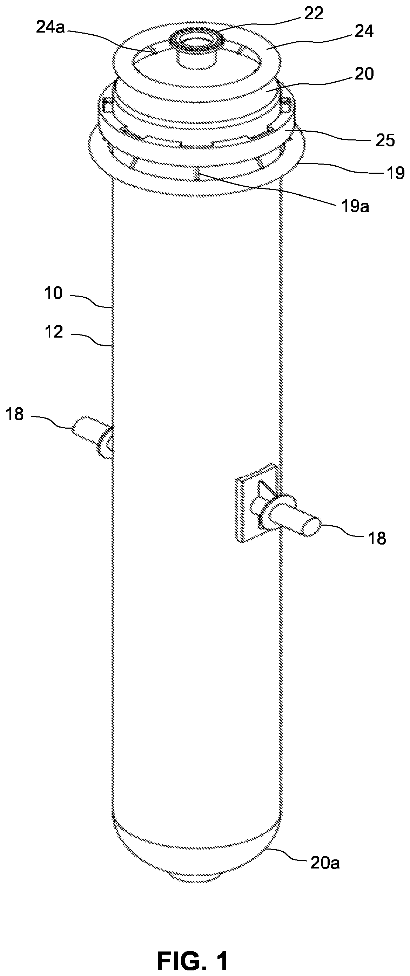

An embodiment of the invention will now be described with reference to Figs. 1 to 9. Fig. 1 shows a schematic perspective diagram of a pressure vessel 10. The pressure vessel 10 has a cylindrical shape, and may be at least four times longer in length than width. The pressure vessel may comprise an outer skin 12 in the shape of a cylinder, a head 20 at one end of the primary container 12, and a base 20a at an opposite end of the primary container 12.

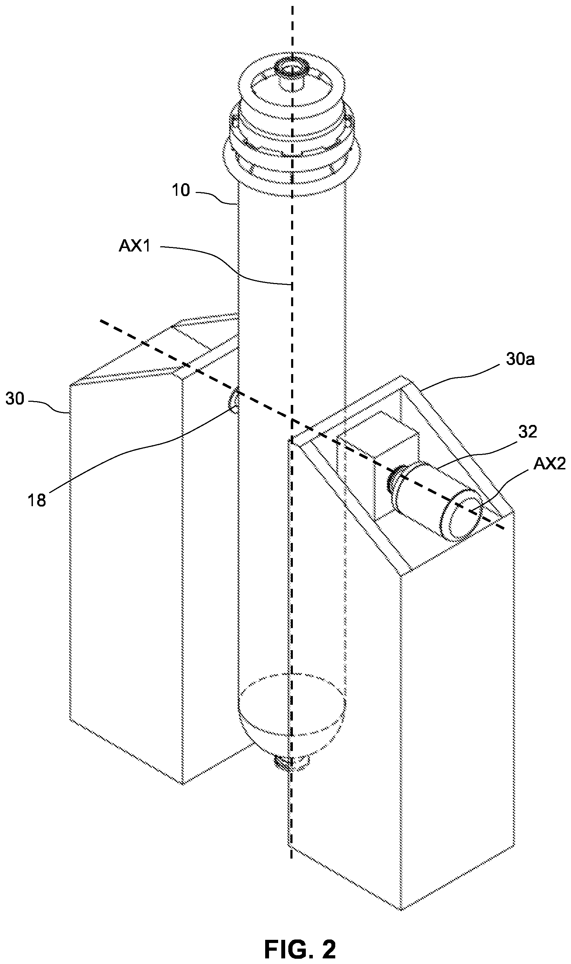

The head 20 may comprise an inlet pipe 22, which may be aligned along a central axis AX1 (see Fig. 2) of the pressure vessel 10. The inlet pipe 22 may be at the uppermost part of the pressure vessel when the pressure vessel is in an upright orientation as shown in Fig. 1, in which the head 10 is vertically above the base 20a. The inlet pipe 22 may be used as an outlet for hydrogen gas that has been generated inside the pressure vessel, and/or to inject gas for heating into the pressure vessel.

The head 20 may comprise a ring header 24, which may be used to inject or extract various gases from the pressure vessel, as will be explained further below.

The ring header 24 is in the shape of a ring and is connected to a plurality of pipes 24a. The plurality of pipes 24a may be evenly spaced around the ring header 24 and extend radially inwards and/or axially to carry gases from the ring header 24 towards an interior 10a (see Fig. 2) of the pressure vessel 10. The primary container 12 may also be connected to a ring header 19 adjacent the head 20, the ring header 19 also configured to inject or extract various gases from the pressure vessel via a plurality of pipes 19b. The further equipment, which may be used to convey gases to and from the ring headers 19, 24 and the inlet pipe 22, is not shown in the figures for the sake of clarity.

The pressure vessel 10 may comprise a breech locking ring 25 that is rotatable to lock and unlock the head 20 from the end of the primary container 10a. Accordingly, the head 20 may be unlocked and removed from the primary container 10a when needed.

The pressure vessel 10 may also comprises two pivot shafts 18, and the two pivot shafts 18 may be used to hold and rotate the pressure vessel about the pivot shafts 18. The pivot shafts 18 may be fixed to the outside of the primary container 10a, and are preferably mid-way along the length of the pressure vessel 10. The schematic diagram of Fig. 2 shows the pivot shafts 18 of the pressure vessel 20 aligned along an axis AX2, and connected to a prime mover 30a. The prime mover may take various shapes and configurations, but in the illustrated embodiment may comprise a frame 30 and a hydraulic motor 32 that is configured to rotate the pivot shafts 18, and thereby rotate the pressure vessel 20 about the axis AX2. As shown, the axis of rotation AX2 may be perpendicular to the longitudinal axis AX1 of the cylindrical shape of the pressure vessel. The prime mover is configured to hold the axis AX2 of the pivot shafts horizontal, such that rotation of the pressure vessel about the axis AX2 causes the pressure vessel to rotate in a vertical plane, and the contents of the pressure vessel may thereby repeatedly fall from one end of the pressure vessel to the other end as the pressure vessel is rotated.

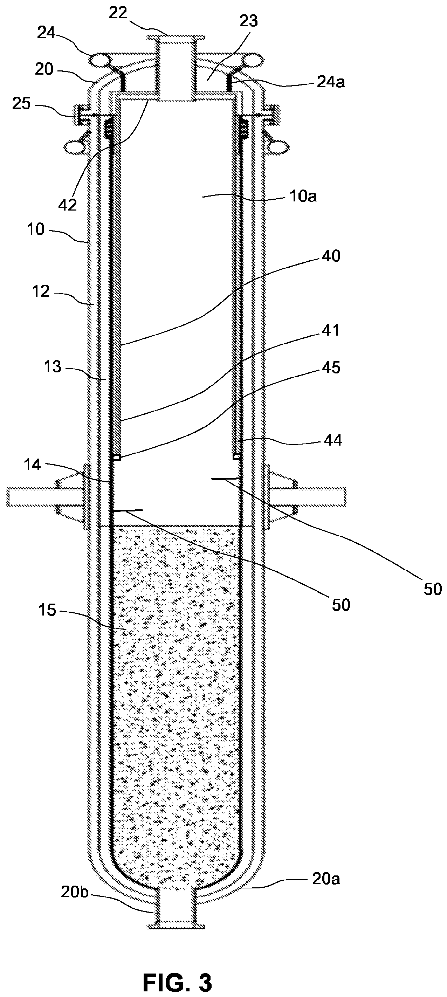

The schematic diagram of Fig. 3 shows a cross-sectional view of the pressure vessel 20, in which the interior details of the pressure vessel are visible. The primary container 12 may be a thick walled, steel pipe configured to resist the very high pressures that may be developed inside the pressure vessel. The pressure vessel also comprises a sheath 14 inside the primary container 12. The sheath 14 may be cylindrical and is preferably co-axial with the primary container 12. A cylindrical layer of heat insulative material 13 fills the space between the primary container 12 and the sheath 14. The sheath 14 may comprise a heat resistant steel layer to resist the high temperatures that occur within the interior space 10a of the pressure vessel, and the insulative material 13 helps reduce heat loss to the primary container 12. The primary container 12 therefore defines an outer skin of the pressure vessel and the sheath 14 defines an inner skin of the pressure vessel. In other embodiments the insulative material and sheath may be combined as a multilayer refractory lining. The interior 10a of the pressure vessel is partially filled with a granular material 15. The granular material may be sand, olivine, or any other inert, non-combustible particulate material capable of storing significant heat. A catalyst material such as NiFe₂O₄ may be added to the granular material if desired, to help speed the gasification reaction and improve the yield of hydrogen. The pressure vessel may comprise an agitation device in the form of baffles 50 (shown in Fig. 3 only) which protrude into the interior space 10a inside the pressure vessel. The baffles may be stationary, or movable, or may not be implemented at all.

The head 20 may be connected to a cartridge 40, and the cartridge 40 may be slidable in and out of the sheath 14 of the pressure vessel. The cartridge 40 may comprise sidewalls 41 in the shape of a cylinder, and a base 42 at one end of the cylinder 40, the base 42 being held by the head 20. The cylindrical sidewalls 41 may fit inside the sheath 14, co-axial with the sheath 14. An external diameter of the sidewalls 41 may be smaller than an internal diameter of the sheath 14, leaving an annular and cylindrical space 44 between the sidewalls 41 of the cartridge 40 and the sheath 14 of the pressure vessel.

The sidewalls 41 of the cartridge may terminate at an annular filter 45, which is positioned at an end of the cartridge opposite from the base 41. The annular filter 45 creates a filter between the annular and cylindrical space 44 and the interior 10a. The annular filter 45 may be configured with small apertures to allow passage of gases between the annular and cylindrical space 44 and the interior 10a, but not passage of particles such as the granular material or biogenic material.

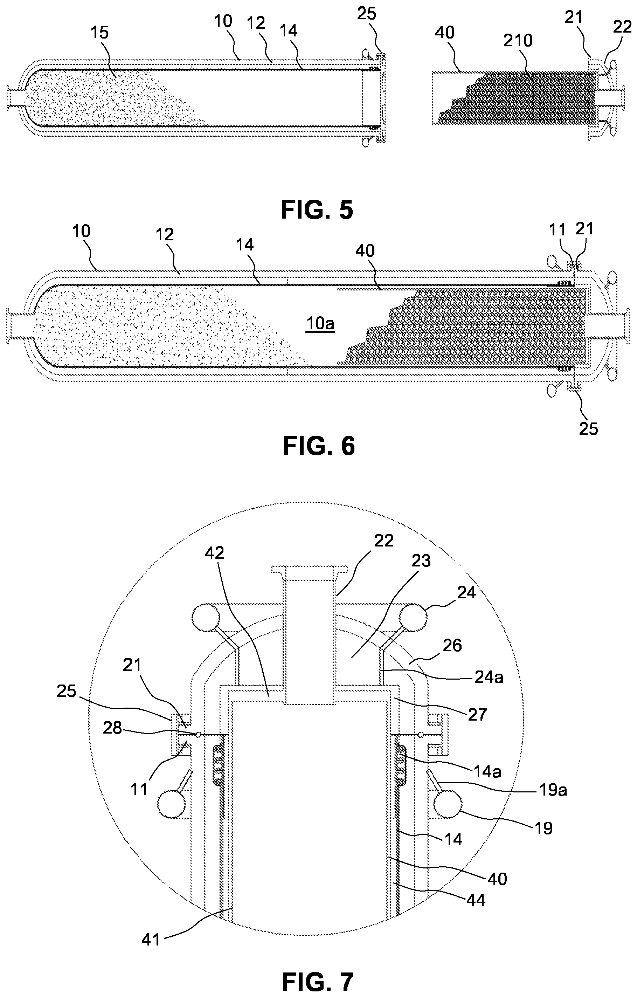

With reference to the enlarged schematic diagram of Fig. 7, the head 20 may comprise an outer dome 26 and an inner cup 27. The inner cup 27 may be positioned inside the outer dome 26, and the inner cup 27 and outer dome 26 may be spaced apart from one another by a heat insulative material 23. The inner cup 27 may hold the base 42 of the cartridge 40. In some embodiments, the cartridge 40 may be separated from the head 20 by withdrawing the base 42 from the inner cup 27. In other embodiments, the cartridge 40 and the head 20 may be permanently fixed together. The inlet 22 is constituted by a pipe 22 that passes through the outer dome 26, insulation 23, and inner cup 27, and opens into the interior space 10a within the pressure vessel.

The outer dome 26 comprises a flange 21 that extends in a radially outward direction at periphery of the dome, and the primary container 12 comprises a flange 11 at the end of the primary container where the head 20 is located. The flange 11 extends radially outward at the end of the primary container, and is configured to abut the flange 21 of the head 20. The breech locking ring 25 overlaps the flanges 11 and 21 at certain angular rotation(s) of the breech locking ring 25, in order to lock the primary container 12 and the head 20 together. The breech locking ring 25 comprises inclined surfaces such that it will not rotate to unlock under the high pressures formed inside the pressure vessel, which act to force the head 20 and the primary container 12 away from one another. An O-ring 28 seals the joint between the head 20 and the primary container 12 to prevent leakage of gases. In other embodiments the breech locking device could be substituted with other types of sealing devices such as bolted flanges or hydraulically clamped flanges.

Due to the insulation 13, the sheath 14 reaches a much higher temperature than the primary container 12 during the gasification reaction. Therefore, the sheath 14 thermally expands in an axial direction relative to the primary container 12. This expansion is accommodated by a bellows section 14a at an end of the sheath 14 adjacent the head 20, and the bellows section 14a axially contracts and expands as the sheath 14 is heated and cooled relative to the primary container 12, respectfully.

The plurality of pipes 24a from the ring header 24 pass though the outer dome 26, insulation 23, and inner cup 27, providing a passage from the ring header 24 to the annular and cylindrical space 44. The plurality of pipes 19a from the ring header 19 also provide a passage from the ring header 19 to the annular and cylindrical space 44. The annular and cylindrical space 44 terminates at the annular filter 45 (see Fig. 3). Accordingly, gases can be injected into the interior 10a of the pressure vessel, via the ring headers 19 or 24, the annular and cylindrical space 44, and the annular filter 45. As shown in Fig. 3, the base 20a of the pressure vessel may comprise an inlet pipe 20b through which gases may be injected or extracted from the pressure vessel. All four of the inlet pipe 22, inlet pipe 20b, ring header 19 and ring header 24 may be used to introduce or extract gases from the interior 10a of the pressure vessel. The gases may include purge gas, heated gas, or syngas. The gases could be steam, carbon dioxide, nitrogen, oxygen, syngas, hydrogen, etc.

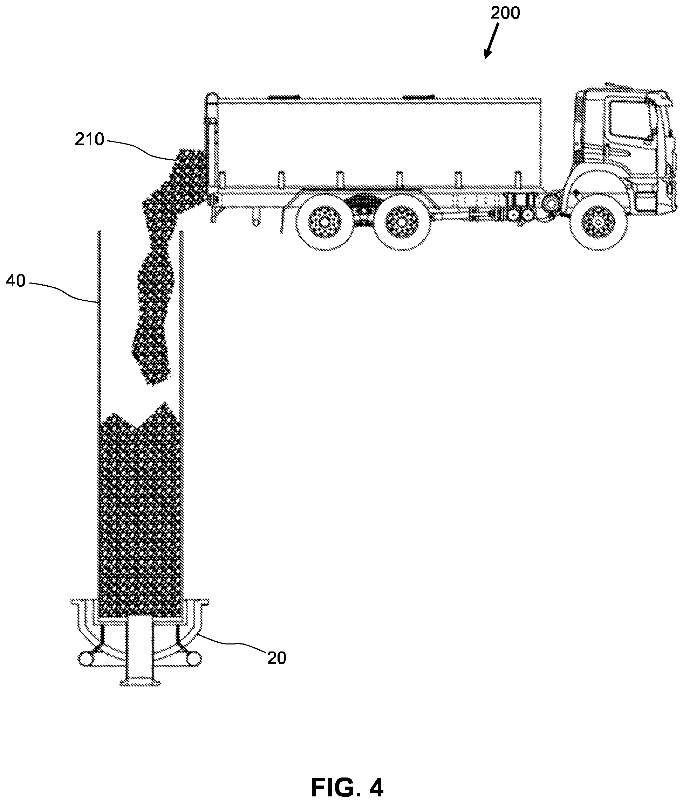

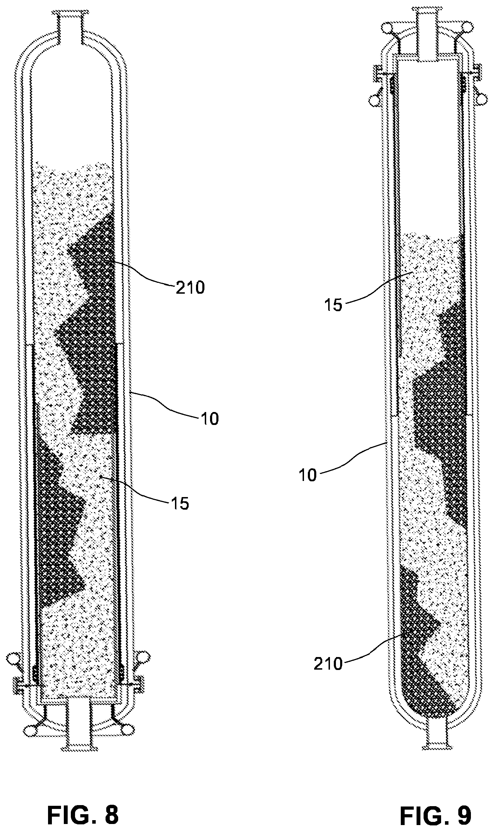

The use of the apparatus to generate hydrogen will now be described with reference to Figs. 4 to 8, and the flow diagram of Fig. 9. In a first step 101 shown in Fig. 9, the granular material 15 inside the pressure vessel may be heated up to a high temperature of at least 500 °C, for example of 850 °C. The heating may for example be achieved by circulating heated gas through the pressure vessel via the inlets 22 and 20b, or by combustion of gas inside the pressure vessel, particularly if the granular material is already hot from a previous gasification cycle. For example, the temperature of the granular material may be at 650 °C after a previous gasification cycle, requiring heating up to 850 °C for the next gasification cycle.

The heat required to raise the temperature of the granular material from ambient temperature for the first gasification cycle is considerable (approximately 700 kJ/kg for sand as the granular material), and heating is best done by circulating heated gas through the closed pressure vessel. During start-up from ambient temperatures, heating a static sand bed is particularly inefficient, and so it is desirable to maximise the particle-to-particle interaction to raise the temperature, for example by fluidising or tumbling the granular material inside the pressure vessel or outside the pressure vessel in a fluidised bed.

In second step 102 the biogenic material may be added to the cartridge 40. The second step 102 may take place before, after, or at the same time as step 101. The schematic diagram of Fig. 4 shows the cartridge 40 and head 20 in a state where they have been removed from the pressure vessel 10. The cartridge 40 has been moved into an inverted position, in which a batch of biogenic material 210 is tipped from a lorry 200 into the open end of the cartridge that is opposite from the head 20. The biogenic material 210 may for example be wood chippings/pellets or other biogenic materials such as household waste or animal manure.

In a third step 103, the cartridge 40 with the biogenic material 210 may be inserted into the pressure vessel 10. First the pressure vessel may be orientated in an upright position, so that all the granular material 15 falls toward the base 20a of the pressure vessel. Then, as shown in Fig. 5, the pressure vessel 10 and cartridge 40 may be orientated horizontally, with both open to the atmosphere, and so at atmospheric pressure. The cartridge 40 may then be slid into the pressure vessel 10, as shown in Fig. 6, and the breech locking ring 25 may be rotated to lock the head 20 to the primary container 12, locking the cartridge 40 inside the pressure vessel 10. Since the pressure vessel 10 and cartridge 40 are orientated horizontally, the granular material 15 is not yet mixed with the biogenic material 210, and so the heat from the granular material 15 does not immediately result in combustion/oxidisation of the biogenic material. This is despite the presence of oxygen in the atmospheric air that was captured within the pressure vessel when the head 20 was locked to the primary container 12.

In a step 104, the atmospheric air within the interior 10a of the pressure vessel may be purged from the pressure vessel 10 by pumping in purge gas. Referring to Fig. 7, the purge gas may be pumped into the ring headers 19 and 24, travel along the pipes 19a and 24a, along the annular and cylindrical space 44, and into the interior 10a via the annular filter 45 (shown in Fig. 3 only for clarity). The purge gas may force the atmospheric air out of the inlets 22 and 20b, thereby removing the atmospheric air and its oxygen. It will be appreciated that combustion of the biogenic material is undesired, since the aim is gasification into hydrogen, and the removal of the atmospheric air and its oxygen using the purge gas inhibits combustion. The purge gas is preferably inert gas, for example nitrogen or carbon dioxide. The step 104 may take place at the same time as step 103, so that the pressure vessel is purged of oxygen during the insertion of the cartridge into the pressure vessel. The purge gas may also be injected into the pressure vessel to purge it of oxygen before the cartridge is inserted into the pressure vessel.

Once the oxygen has been purged from the pressure vessel 10 and the cartridge 40 has been locked inside the pressure vessel, the pressure vessel may be rotated in a step 105 to mix the granular material 15 with the biogenic material 210, thereby rapidly heating the biogenic material 210 to raise the temperature of the biogenic material, evaporate and superheat the water from the biogenic material and commence gasification. Fig. 8 shows the pressure vessel 10 when it has been rotated into an inverted position by the prime mover 30a (see Fig. 3), and Fig. 9 shows the pressure vessel 10 when it has been rotated back into the upright position. The prime mover 30a may repeatedly rotate the pressure vessel by 180 degrees between the upright and inverted positions, mixing the granular material 15 with the biogenic material 210 as shown in Figs. 8 and 9. The prime mover 30a may rotate the pressure vessel 180 degrees clockwise from the upright position to the inverted position, then 180 degrees anti-clockwise from the inverted position back to the upright position, and then repeat. This may result in improved mixing compared to rotating in one direction (clockwise or anticlockwise) by 360 degrees, and also places less stress on the pipes (not shown in Figs) that are connected to the various inlets and ring headers of the pressure vessel.

In an embodiment where the baffles 50 (see Fig. 3) are implemented, the mixture of granular material 15 and biogenic material 210 is diverted by and falls over the baffles 50 as it moves from one end of the pressure vessel 10 to the other end of the pressure vessel 10 during the rotation of the pressure vessel 10, improving the mixing of the granular material 15 with the biogenic material 210.

As the mixing occurs, the granular material may raise the temperature of the biogenic material to around 700 °C, and more and more of the biogenic material becomes gasified. The gas that is produced steadily raises the pressure within the pressure vessel to over the 22.064 MPa required for supercritical water gasification. Steam may be pumped into the pressure vessel via the ring headers 19 or 24, to provide additional water for the water-gas shift reaction to take place. It is also possible to pump in heated gas, for example carbon dioxide or nitrogen at high temperatures, if any additional heat is required to reach and sustain the required temperatures. Oxygen may be pumped in to combust some of the hydrogen to sustain gasification temperatures. Gas may also be pumped in to help agitate the mixture of granular material and biogenic material, to provide improved mixing and heat transfer, leading to faster gasification.

Once the gasification reaction has been completed, the pressure vessel may be held in the upright position, so that all the granular material 15 falls towards the base 20a. Then, in a step 106, the hydrogen gas may be discharged through the inlet 22, and on to any further stages of processing that may be implemented. Any other components of the syngas may also be discharged, and the method then returns back to step 101, to execute a further gasification cycle.

In the case where the granular material comprises calcium carbonate, which has been converted from calcium oxide by reacting with carbon dioxide produced during the gasification in step 105, the step 101 of heating the granular material in the further gasification cycle will result in thermal decomposition of the calcium carbonate back to calcium oxide and carbon dioxide. Therefore, step 101 may further comprise discharging the carbon dioxide from the pressure vessel, for example through the inlet 22, and storing the carbon dioxide. Thus, carbon capture may be performed without significant energy cost by using calcium oxide in the granular material.

If the biogenic material 210 contained any contaminant materials such as metals, then those will add to the granular material 15 for subsequent cycles, until such time as the granular material 15 is removed for cleaning or for replacement.

Many other variations of the described embodiments falling within the scope of the invention will be apparent to those skilled in the art. For example, whilst the inlet pipes for gas are positioned at the ends of the pressure vessel in the illustrated embodiments, they could be positioned more centrally adjacent the pivots or within the pivots in alternate embodiments.

## Claims

1. A method of producing hydrogen gas from biogenic material within a pressure vessel, comprising heating a granular material to greater than 500°C, adding a batch of biogenic material into the pressure vessel with the heated granular material at atmospheric pressure, closing the pressure vessel, and mixing the heated granular material with the biogenic material inside the closed pressure vessel to raise the temperature of the biogenic material and commence gasification, the gasification producing gas that increases the pressure inside the pressure vessel, the produced gas comprising hydrogen gas.

2. The method of claim 1, wherein heating the granular material comprises combusting hydrogen gas generated from an earlier batch of biogenic material;
and/or,
wherein mixing the granular material with the biogenic material comprises rotating the pressure vessel;
and/or,
wherein the biogenic material is composed of particles, the particles having different sizes from one another and optionally different levels of moisture content from one another.

3. The method of claim 1 or claim 2, wherein adding a batch of biogenic material into the pressure vessel at atmospheric pressure comprises loading the biogenic material into a cartridge, and sliding the cartridge into an end of the pressure vessel, the granular material residing at an opposite end of the pressure vessel from the cartridge.

4. The method of claim 3, wherein the pressure vessel has a longitudinal axis along a length of the pressure vessel, and wherein sliding the cartridge into the end of the pressure vessel comprises orientating the pressure vessel with the longitudinal axis extending horizontally, and sliding the cartridge in a direction along the longitudinal axis and into the end of the pressure vessel.

5. The method of any preceding claim, further comprising pumping gas into the pressure vessel to purge it of oxygen, prior to the mixing of the heated granular material with the biogenic material;
and/or,
further comprising pumping water or steam into the pressure vessel to induce a water-gas shift reaction subsequent to or during the mixing of the heated granular material with the biogenic material.

6. The method of any preceding claim, further comprising discharging the hydrogen gas under pressure from the pressure vessel after the gasification, preferably wherein the hydrogen is outlet from an opposite end of the pressure vessel from an end of the pressure vessel where the granular material is present.

7. The method of any preceding claim, wherein the granular material comprises calcium oxide, wherein the gas produced by the gasification comprises carbon dioxide, and wherein the carbon dioxide reacts with calcium oxide to produce calcium carbonate.

8. The method of claim 7 when appended to claim 6, comprising heating the calcium carbonate after the hydrogen has been discharged from the pressure vessel to release carbon dioxide from the calcium carbonate, and capturing the carbon dioxide.

9. An apparatus for producing hydrogen gas from biogenic material, the apparatus comprising a pressure vessel configured to store a granular material that is heated to at least 500 °C, the pressure vessel comprising a head that is openable to add a batch of biogenic material at an opposite end of the pressure vessel from the heated granular material whilst the pressure vessel is at atmospheric pressure, and a prime mover configured to rotate the pressure vessel to mix the granular material and the biogenic material together,
wherein the pressure vessel is cylindrical in shape and comprises pivots, wherein the prime mover is configured to rotate the pressure vessel about the pivots, and wherein the pivots enable pivoting of the pressure vessel about an axis that is perpendicular to a longitudinal axis of the cylindrical shape.

10. The apparatus of claim 9, wherein the pressure vessel comprises an inlet adjacent the pivots or within the pivots.

11. The apparatus of claim 9 or claim 10, comprising a cartridge that is configured to slide into the pressure vessel when the head is opened from the pressure vessel, the cartridge configured to hold the batch of biogenic material.

12. The apparatus of any one of claims 9 to 11, wherein the pressure vessel comprises an outer skin, an inner skin, and a heat insulative material between the inner and outer skins.

13. The apparatus of claim 12 when appended to claim 11, wherein the cartridge is configured to slide inside the inner skin whilst leaving an annular and cylindrical space between the cartridge and the inner skin, and wherein the head comprises an inlet to the annular and cylindrical space, for injection of fluid or gas into the pressure vessel during gasification.

14. The apparatus of claim 13, wherein an end of the cartridge comprises an annular filter configured to block entry of the heated granular material and the biogenic material into the annular and cylindrical space.

15. The apparatus of any one of claims 9 to 14, wherein the pressure vessel comprises an agitation device inside the pressure vessel, the agitation device configured to agitate the mixture of the granular material and the biogenic material.

## Patentansprüche

1. Verfahren zum Herstellen von Wasserstoffgas aus biogenem Material innerhalb eines Druckbehälters, umfassend Erhitzen eines körnigen Materials auf mehr als 500 °C, Hinzufügen einer Charge von biogenem Material in den Druckbehälter mit dem erhitzten körnigen Material bei Atmosphärendruck, Schließen des Druckbehälters und Mischen des erhitzten körnigen Materials mit dem biogenen Material im Inneren des geschlossenen Druckbehälters, um die Temperatur des biogenen Materials zu erhöhen und mit der Vergasung zu beginnen, wobei die Vergasung Gas herstellt, das den Druck im Inneren des Druckbehälters erhöht, wobei das hergestellte Gas Wasserstoffgas umfasst.

2. Verfahren nach Anspruch 1, wobei das Erhitzen des körnigen Materials Verbrennen von Wasserstoffgas umfasst, das aus einer früheren Charge von biogenem Material erzeugt wurde;
und/oder
wobei das Mischen des körnigen Materials mit dem biogenen Material Drehen des Druckbehälters umfasst;
und/oder
wobei das biogene Material aus Partikeln zusammengesetzt ist, wobei die Partikel voneinander verschiedene Größen und optional voneinander verschiedene Grade des Feuchtigkeitsgehalts aufweisen.

3. Verfahren nach Anspruch 1 oder Anspruch 2, wobei das Hinzufügen einer Charge von biogenem Material in den Druckbehälter bei Atmosphärendruck Laden des biogenen Materials in eine Patrone und Schieben der Patrone in ein Ende des Druckbehälters umfasst, wobei sich das körnige Material an einem entgegengesetzten Ende des Druckbehälters von der Patrone aus befindet.

4. Verfahren nach Anspruch 3, wobei der Druckbehälter eine Längsachse entlang einer Länge des Druckbehälters aufweist und wobei das Schieben der Patrone in das Ende des Druckbehälters Ausrichten des Druckbehälters mit der sich horizontal erstreckenden Längsachse und Schieben der Patrone in einer Richtung entlang der Längsachse und in das Ende des Druckbehälters umfasst.

5. Verfahren nach einem vorhergehenden Anspruch, ferner umfassend Pumpen von Gas in den Druckbehälter, um ihn von Sauerstoff zu reinigen, vor dem Mischen des erhitzten körnigen Materials mit dem biogenen Material;
und/oder
ferner umfassend Pumpen von Wasser oder Dampf in den Druckbehälter, um eine Wassergas-Shift-Reaktion nach oder während des Mischens des erhitzten körnigen Materials mit dem biogenen Material zu induzieren.

6. Verfahren nach einem vorhergehenden Anspruch, ferner umfassend Ablassen des Wasserstoffgases unter Druck aus dem Druckbehälter nach der Vergasung, bevorzugt wobei der Wasserstoff von einem entgegengesetzten Ende des Druckbehälters von einem Ende des Druckbehälters aus, an dem das körnige Material vorliegt, ausgelassen wird.

7. Verfahren nach einem vorhergehenden Anspruch, wobei das körnige Material Calciumoxid umfasst, wobei das durch die Vergasung hergestellte Gas Kohlenstoffdioxid umfasst und wobei das Kohlenstoffdioxid mit Calciumoxid reagiert, um Calciumcarbonat herzustellen.

8. Verfahren nach Anspruch 7, wenn abhängig von Anspruch 6, umfassend Erhitzen des Calciumcarbonats, nachdem der Wasserstoff aus dem Druckbehälter abgelassen wurde, um Kohlenstoffdioxid aus dem Calciumcarbonat freizusetzen, und Abfangen des Kohlenstoffdioxids.

9. Vorrichtung zum Herstellen von Wasserstoffgas aus biogenem Material, wobei die Vorrichtung einen Druckbehälter, der dazu konfiguriert ist, ein körniges Material zu lagern, das auf mindestens 500 °C erhitzt wird, wobei der Druckbehälter einen Kopf umfasst, der öffenbar ist, um eine Charge von biogenem Material an einem entgegengesetzten Ende des Druckbehälters von dem erhitzten körnigen Material aus hinzuzufügen, während sich der Druckbehälter bei Atmosphärendruck befindet, und eine Antriebsmaschine umfasst, die dazu konfiguriert ist, den Druckbehälter zu drehen, um das körnige Material und das biogene Material miteinander zu mischen,
wobei der Druckbehälter eine zylindrische Form hat und Schwenkzapfen umfasst, wobei die Antriebsmaschine dazu konfiguriert ist, den Druckbehälter um die Schwenkzapfen zu drehen, und wobei die Schwenkzapfen ein Schwenken des Druckbehälters um eine Achse ermöglichen, die senkrecht zu einer Längsachse der zylindrischen Form ist.

10. Vorrichtung nach Anspruch 9, wobei der Druckbehälter einen Einlass benachbart zu den Schwenkzapfen oder innerhalb der Schwenkzapfen umfasst.

11. Vorrichtung nach Anspruch 9 oder Anspruch 10, umfassend eine Patrone, die dazu konfiguriert ist, in den Druckbehälter geschoben zu werden, wenn der Kopf von dem Druckbehälter geöffnet wird, wobei die Patrone dazu konfiguriert ist, die Charge von biogenem Material zu halten.

12. Vorrichtung nach einem der Ansprüche 9 bis 11, wobei der Druckbehälter eine Außenhaut, eine Innenhaut und ein wärmeisolierendes Material zwischen der Innenhaut und der Außenhaut umfasst.

13. Vorrichtung nach Anspruch 12, wenn abhängig von Anspruch 11, wobei die Patrone dazu konfiguriert ist, in das Innere der Innenhaut geschoben zu werden, während ein ringförmiger und zylindrischer Raum zwischen der Patrone und der Innenhaut belassen wird, und wobei der Kopf einen Einlass in den ringförmigen und zylindrischen Raum zum Einspritzen von Fluid oder Gas in den Druckbehälter während der Vergasung umfasst.

14. Vorrichtung nach Anspruch 13, wobei ein Ende der Patrone einen ringförmigen Filter umfasst, der dazu konfiguriert ist, den Eintritt des erhitzten körnigen Materials und des biogenen Materials in den ringförmigen und zylindrischen Raum zu blockieren.

15. Vorrichtung nach einem der Ansprüche 9 bis 14, wobei der Druckbehälter eine Rühreinrichtung im Inneren des Druckbehälters umfasst, wobei die Rühreinrichtung dazu konfiguriert ist, die Mischung aus dem körnigen Material und dem biogenen Material zu rühren.

## Revendications

1. Procédé de production d'hydrogène gazeux à partir d'un matériau biogène au sein d'un récipient sous pression, comprenant le chauffage d'un matériau granulaire à une température supérieure à 500 °C, l'ajout d'un lot de matériau biogène dans le récipient sous pression avec le matériau granulaire chauffé à la pression atmosphérique, la fermeture du récipient sous pression, et le mélange du matériau granulaire chauffé avec le matériau biogène à l'intérieur du récipient sous pression fermé pour augmenter la température du matériau biogène et commencer une gazéification, la gazéification produisant du gaz qui augmente la pression à l'intérieur du récipient sous pression, le gaz produit comprenant de l'hydrogène gazeux.

2. Procédé de la revendication 1, dans lequel le chauffage du matériau granulaire comprend la combustion d'hydrogène gazeux généré à partir d'un lot antérieur de matériau biogène ;
et/ou,
dans lequel le mélange du matériau granulaire avec le matériau biogène comprend la rotation du récipient sous pression ;
et/ou,
dans lequel le matériau biogène est composé de particules, les particules présentant des tailles différentes les unes des autres et éventuellement des niveaux de teneur en humidité différents les unes des autres.

3. Procédé de la revendication 1 ou de la revendication 2, dans lequel l'ajout d'un lot de matériau biogène dans le récipient sous pression à la pression atmosphérique comprend le chargement du matériau biogène dans une cartouche, et le coulissement de la cartouche dans une extrémité du récipient sous pression, le matériau granulaire résidant à une extrémité opposée du récipient sous pression par rapport à la cartouche.

4. Procédé de la revendication 3, dans lequel le récipient sous pression présente un axe longitudinal le long d'une longueur du récipient sous pression, et dans lequel le coulissement de la cartouche dans l'extrémité du récipient sous pression comprend l'orientation du récipient sous pression avec l'axe longitudinal s'étendant horizontalement, et le coulissement de la cartouche dans une direction le long de l'axe longitudinal et dans l'extrémité du récipient sous pression.

5. Procédé d'une quelconque revendication précédente, comprenant en outre le pompage de gaz dans le récipient sous pression pour le purger d'oxygène, avant le mélange du matériau granulaire chauffé avec le matériau biogène ;
et/ou,
comprenant en outre le pompage d'eau ou de vapeur dans le récipient sous pression pour induire une réaction de décalage eau-gaz à la suite du mélange du matériau granulaire chauffé avec le matériau biogène ou pendant celui-ci.

6. Procédé d'une quelconque revendication précédente, comprenant en outre l'évacuation de l'hydrogène gazeux sous pression à partir du récipient sous pression après la gazéification, de préférence dans lequel l'hydrogène sort d'une extrémité opposée du récipient sous pression par rapport à une extrémité du récipient sous pression où le matériau granulaire est présent.

7. Procédé d'une quelconque revendication précédente, dans lequel le matériau granulaire comprend de l'oxyde de calcium, dans lequel le gaz produit par la gazéification comprend du dioxyde de carbone, et dans lequel le dioxyde de carbone réagit à l'oxyde de calcium pour produire du carbonate de calcium.

8. Procédé de la revendication 7 lorsqu'elle est associée à la revendication 6, comprenant le chauffage du carbonate de calcium après l'évacuation de l'hydrogène du récipient sous pression pour libérer du dioxyde de carbone du carbonate de calcium, et la capture du dioxyde de carbone.

9. Appareil destiné à produire de l'hydrogène gazeux à partir d'un matériau biogène, l'appareil comprenant un récipient sous pression conçu pour stocker un matériau granulaire qui est chauffé à au moins 500 °C, le récipient sous pression comprenant une tête qui peut être ouverte pour ajouter un lot de matériau biogène à une extrémité opposée du récipient sous pression par rapport au matériau granulaire chauffé tandis que le récipient sous pression est à la pression atmosphérique, et un moteur d'entraînement conçu pour faire tourner le récipient sous pression pour mélanger le matériau granulaire et le matériau biogène l'un avec l'autre,
dans lequel le récipient sous pression est de forme cylindrique et comprend des pivots, dans lequel le moteur d'entraînement est conçu pour faire tourner le récipient sous pression autour des pivots, et dans lequel les pivots permettent le pivotement du récipient sous pression autour d'un axe qui est perpendiculaire à un axe longitudinal de la forme cylindrique.

10. Appareil de la revendication 9, dans lequel le récipient sous pression comprend une entrée adjacente aux pivots ou au sein des pivots.

11. Appareil de la revendication 9 ou de la revendication 10, comprenant une cartouche qui est conçue pour coulisser dans le récipient sous pression lorsque la tête est ouverte depuis le récipient sous pression, la cartouche étant conçue pour contenir le lot de matériau biogène.

12. Appareil de l'une quelconque des revendications 9 à 11, dans lequel le récipient sous pression comprend une peau externe, une peau interne et un matériau d'isolation thermique entre les peaux interne et externe.

13. Appareil de la revendication 12 lorsqu'elle est associée à la revendication 11, dans lequel la cartouche est conçue pour coulisser à l'intérieur de la peau interne tout en laissant un espace annulaire et cylindrique entre la cartouche et la peau interne, et dans lequel la tête comprend une entrée dans l'espace annulaire et cylindrique, pour l'injection de fluide ou de gaz dans le récipient sous pression pendant la gazéification.

14. Appareil de la revendication 13, dans lequel une extrémité de la cartouche comprend un filtre annulaire conçu pour bloquer la pénétration du matériau granulaire chauffé et du matériau biogène dans l'espace annulaire et cylindrique.

15. Appareil de l'une quelconque des revendications 9 à 14, dans lequel le récipient sous pression comprend un dispositif d'agitation à l'intérieur du récipient sous pression, le dispositif d'agitation étant conçu pour agiter le mélange du matériau granulaire et du matériau biogène.
